# EUROPÄISCHE PATENTSCHRIFT

(11) **EP 0 374 504 B1**
(45) Veröffentlichungstag und Bekanntmachung des Hinweises auf die Patenterteilung: **10.02.1993**
(21) Anmeldenummer: 89121591.5
(22) Anmeldetag: 23.11.1989
(51) Int. Cl.: B60G 3/20, B60G 15/06

(54) **Radaufhängung für Fahrzeuge**
Vehicle wheel suspension
Suspension de roues pour véhicules

(30) Priorität: 23.12.1988 DE 3843612
(43) Veröffentlichungstag der Anmeldung: 27.06.1990
(73) Patentinhaber: Bayerische Motoren Werke Aktiengesellschaft, 80788 München (DE)
(72) Erfinder: Hajtó, Jenö, D-8000 München 2 (DE)

(56) Entgegenhaltungen:
- DE-A- 2 614 285
- DE-C- 3 136 125
- DE-C- 3 507 081
- FR-A- 1 149 962
- PATENT ABSTRACTS OF JAPAN, Band 13, Nr. 60 (M-796)[3408], 10. Februar 1989; & JP-A-63 265 712 (MAZDA MOTOR CORP.) 02-11-1988

## Beschreibung

Die Erfindung betrifft eine Radaufhängung für Fahrzeuge gemäß dem Oberbegriff des Anspruchs 1.

Aus der EP-A-0 289 889 ist bereits eine Radaufhängung für gelenkte Räder von Kraftfahrzeugen bekannt, die einen Radträger aufweist, der an zwei oberen und an zwei unteren Lenkern geführt ist. Die Lenker sind jeweils über elastische Gelenke an dem Radträger bzw. am Aufbau des Kraftfahrzeuges angelenkt. Ein Federbein ist mit seinem unteren Ende über ein Gelenk mit einem unteren Querlenker verbunden. Das obere Ende des Federbeins stützt sich am Fahrzeugaufbau ab. Ziel dieser Radaufhängung ist es, bei angetriebenen und gelenkten Rädern eine zuverlässige Lenkungsrückstellung und einen verbesserten Freigang der Gelenkwellen sicherzustellen. Dies wird dadurch erreicht, daß sich die Feder des Federbeins derart an einem der unteren Lenker abstützt, daß dieser eine Querkraftkomponente im Sinne eines Lenkeinschlages ausübt. Ferner sind die beiden unteren Lenker so am Radträger angelenkt, daß sich eine ideelle Lenkachse ergibt, die nur gering zur senkrechten Radmittenebene in Höhe der Radachse beabstandet ist.

Es sind bereits Doppelquerlenkerachsen bekannt, die aus einem oberen und unteren Querlenker bestehen, die jeweils an ihrem radseitigen Ende mit einem das Rad lagernden Radträger gelenkig verbunden sind und mit ihrem aufbauseitigen Ende am Aufbau angelenkt sind. Zwischen diesem Querlenkerpaar liegt eine Feder, die einen hydraulischen Stoßdämpfer umschließt und die den unteren Querlenker federnd gegen den Aufbau abstützt. Solche Doppelquerlenkerachsen haben jedoch den Nachteil, daß die für den Abrollkomfort benötigte Längsfederung nur schwer realisierbar ist, da damit beim Bremsen ein "Aufziehen" des Radträgers erzeugt wird und ferner ein starkes Verdrehen der Lenkachse auftritt.

Ferner sind Federbeinachsen bekannt, die aus einem unteren Querlenker und einem mit diesem gelenkig in Verbindung stehenden Federbein bestehen. Bei dieser Konstruktion ist der Achsschenkel, auf dem das Rad sitzt, fest mit dem unteren Teil des Federbeins verbunden. Beim Lenken dreht sich das ganze Federbein, das oben und unten beweglich mit dem Aufbau bzw. dem unteren Querlenker verbunden ist. Eine Schraubenfeder umgibt den oberen Teil des Federbeins, das mit einem Teleskopstoßdämpfer kombiniert ist. Bei solchen Federbeinachsen treten am Dämpferrohr hohe Querkräfte auf, die eine erhöhte Reibung zwischen den gleitenden Teilen des Dämpferbeines bewirken, wodurch die Losbrechkräfte beim Ein- und Ausfedern erhöht werden und dadurch der Federungskomfort beeinträchtigt wird. Darüber hinaus ist bei solchen Federbeinachsen die Radführungskinematik mit der Lenkgeometrie gekoppelt, so daß eine Optimierung schwierig ist.

Aufgabe der Erfindung ist es, eine Radaufhängung der oben genannten Art zu schaffen, die eine verbesserte Längsfederung und ein geringeres Aufziehen des Radträgers beim Bremsen aufweist und die eine Optimierung sowohl der Lenkgeometrie als auch der Radführungskinematik ermöglicht.

Diese Aufgabe wird erfindungsgemäß durch die Merkmale des kennzeichnenden Teils des Anspruchs 1 gelöst.

Bei der erfindungsgemäßen Radaufhängung treten im normalen Fahrbetrieb keine Querkräfte am Dämpferrohr auf, so daß die Losbrechkräfte klein bleiben. Von Vorteil ist ferner, daß die erfindungsgemäße Radaufhängung eine niedrige Bauhöhe aufweist. Die aufbauseitige Anlenkung des oberen Querlenkers ist einfach durchführbar, da diese nur einen kleinen Anteil eines Bremsmomentes abstützen muß.

Bei der Verwendung eines unteren Querlenkers in der Doppelgelenkausführung, die einen ideellen Lenkpunkt aufweist, können auch relativ große Bremsscheiben realisiert werden.

Vorteilhafte Ausführungsformen sind in den Unteransprüchen beschrieben.

Ausführungsformen der Erfindung werden nachstehend anhand der Zeichnungen beispielshalber dargestellt. Dabei zeigen:
Figur 1 eine Radaufhängung, mit einem unteren Querlenker in der Eingelenkausführung, in einer Ansicht von hinten in Fahrtrichtung,
Figur 2 eine Draufsicht auf die in der Figur 1 gezeigte Radaufhängung und
Figur 3 eine perspektivische Ansicht der in den Figuren 1 und 2 gezeigten Ausführungsform und
Figur 4 eine perspektivische Ansicht einer Radaufhängung in Richtung der Fahrzeuglängsachse, mit einem unteren Querlenker in der Doppelgelenkausführung.

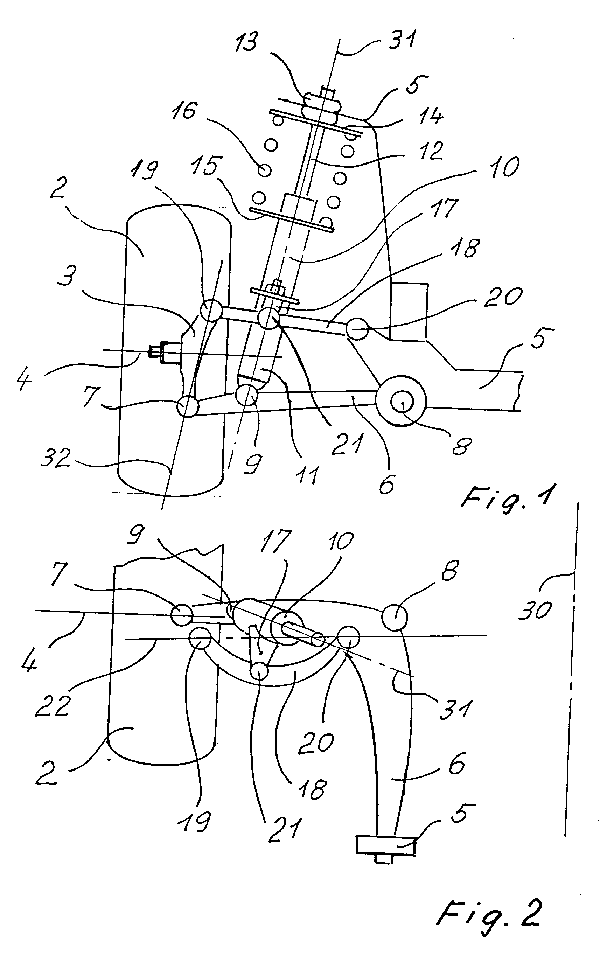

In den Figuren 1 und 2 ist eine Radaufhängung 1 gezeigt, die eine Doppelquerlenkerachse in der Eingelenkausführung darstellt. Ein Rad 2 wird durch einen Radträger 3 gelagert, der über Gelenke 19 bzw. 7 mit einem oberen und einem unteren Querlenker 18 bzw. 6 verbunden ist. Der Querlenker 18 bzw. 6 ist jeweils über ein Gelenk 20 bzw. 8 mit einem Fahrzeugaufbau 5 verbunden. Auf dem unteren Querlenker 6 stützt sich über ein Gelenk 9 ein Federbein 10 ab, das aus einem Dämpferrohr 11 und einer Kolbenstange 12 sowie einer zwischen Federtellern 14 und 15 angeordneten Schraubenfeder 16 besteht. Das Federbein 10 ist am Aufbau 5 über eine Abstützung 13 gelenkig angeordnet. In der Höhe des oberen Querlenkers 18 ist am Dämpferrohr 11 ein Arm 17 fest angeordnet, der mit dem oberen Querlenker 18 über ein Gelenk 21 verbunden ist.

Aus der Figur 2 ist die Bogenform des oberen Querlenkers 18 ersichtlich. Der obere Querlenker 18 ist so gekrümmt, daß eine Verbindungslinie 22 zwischen dem Gelenk 19 und dem Gelenk 20 annähernd durch die Dämpferrohrachse 31 bzw. die Symmetrielinie des Federbeines 10 geht. Der obere Querlenker 18 ist somit um die Verbindungslinie 22 schwenkbar, dadurch bewirken die beim Ein- und Ausfedern auftretenden, vertikalen Relativbewegungen zwischen dem oberen Querlenker und dem Dämpferrohr 11 eine Kippbewegung des Querlenkers 18 um die Verbindungslinie 22. Bedingt durch diese Kippbewegung werden keine Kräfte in vertikaler Richtung durch den Querlenker 18 auf das Dämpferrohr 11 übertragen. Ferner ist das Dämpferrohr 11 des Federbeins 10 so gelagert, daß es sich bei horizontalen Relativbewegungen zwischen dem Querlenker 18 und dem Dämpferrohr 11 um seine Achse 31 dreht.

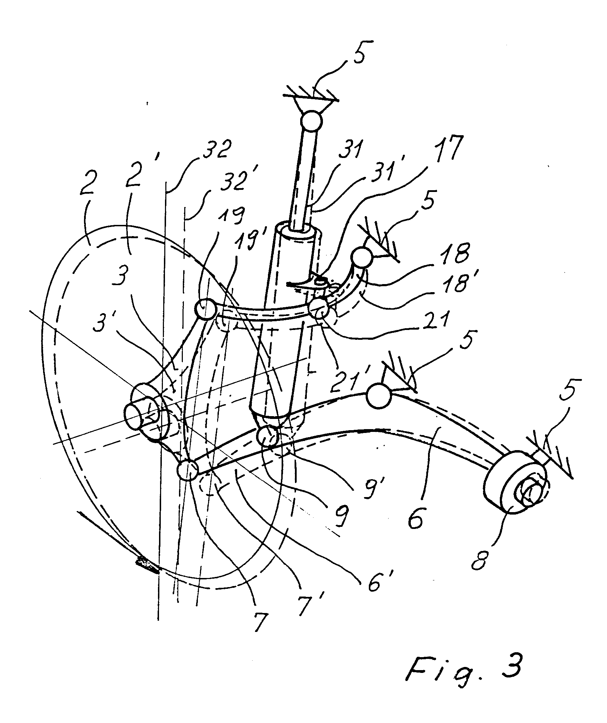

In der Figur 3 wird die beim Bremsvorgang auftretende weitestgehend parallele Verschiebung der Lenkachse 32 gezeigt. Dabei stellen die dicker ausgezogenen Linien die ursprüngliche Lage dar, während die dünner ausgezogenen Linien die neue Lage zeigen. Die entsprechenden Bezugszeichen der in die neue Lage verschobenen Teile sind mit einem Apostroph versehen. Bei bekannten Doppelquerlenkerachsen bewegt sich beim Bremsen das am Radträger angeordnete Gelenk des unteren Querlenkers auf einer Kreisbahn nach hinten, das heißt entgegengesetzt zur Fahrtrichtung, während sich das am Radträger angeordnete Gelenk des oberen Querlenkers auf einer Kreisbahn nach vorne bewegt. Durch diesen Aufzieheffekt wird somit der Nachlaufwinkel und die Nachlaufstrecke stark verändert. Bei der vorliegenden Radaufhängung 1 erfolgt keine Höhenverlagerung der Gelenke 19, 7; 19, 24 und 27 der oberen und unteren Querlenker 18, 6; 18, 23 und 26, wie dies beim Stand der Technik der Fall ist, da das an den Querlenkern auftretende "Aufziehmoment" vom Dämpferrohr 11 abgestützt wird. Aufgrund der über das Dämpferrohr 11 und den Arm 17 festgelegten Zuordnung der Querlenker zueinander, ergibt sich beim Bremsvorgang unter weitestgehender Beibehaltung der Lenkgeometrie eine translatorische Bewegung nach hinten. Wie bereits oben erwähnt, tritt die translatorische Verschiebung sowohl bei einer Doppelquerlenkerachse in der Eingelenkausführung, als auch bei einer Doppelquerlenkerachse in der Zweigelenkausführung auf.

Die am Radaufstandspunkt wirkenden Quer- und Hochkräfte werden von den Querlenkern abgestützt, so daß das Dämpferrohr nicht auf Biegung belastet wird. Dadurch entsteht im normalen Fahrbetrieb und während der Kurvenfahrt keine Querkraft in der Richtung der Radachse 4 am Dämpferrohr 11, wodurch die Losbrechkräfte gering bleiben. Die aufbauseitige Anlenkung des oberen Querlenkers 18 über das Gelenk 20 ist einfach ausführbar, da dieses Gelenk nur einen kleinen Anteil des Bremsmomentes abstützen muß.

In der Regel wird das Gelenk 9 und das Gelenk 21 als Kugelgelenk ausgebildet sein. Ferner ist der untere Querlenker in der Regel elastisch gelagert.

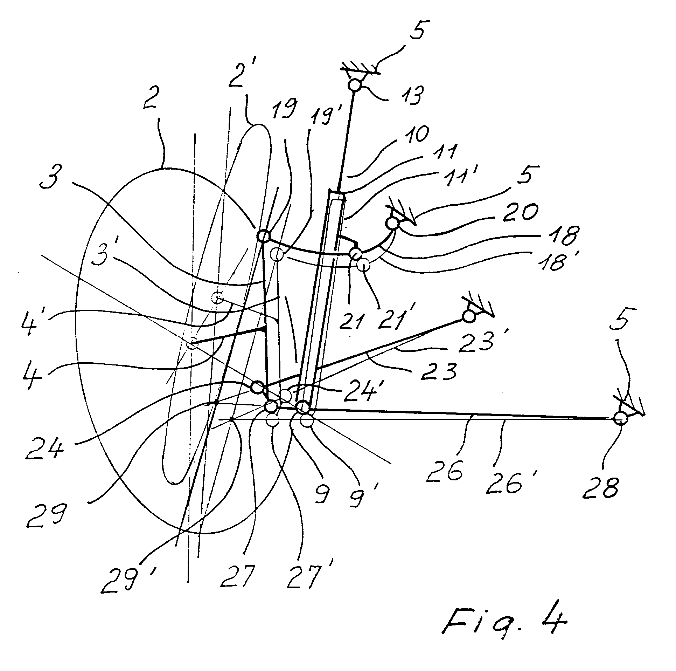

Die in der Figur 4 gezeigte Ausführungsform unterscheidet sich von der in den Figuren 1, 2 und 3 gezeigten Ausführungsform dadurch, daß statt eines einzigen unteren Querlenkers 6 zwei Querlenker 23 und 26 über jeweils ein Gelenk 24 und 27 mit dem Radträger 3 verbunden sind. Durch die Verwendung zweier Querlenker ist es möglich die ideelle Lenkachse 33 weit in die Radschüssel hinein zu verlegen, ohne daß dort der Einbau beispielsweise einer ausreichend dimensionierten Bremse behindert wird. Die ideelle Lenkachse 33 ergibt sich aus einem Schnittpunkt 29 der gedachten Verlängerung der Querlenker 23 und 26, das heißt dem ideellen Lenkpunkt, und dem Gelenk 19 des oberen Querlenkers 18.

In der in der Figur 4 gezeigten Ausführungsform wird der am kurvenäußeren Rad auftretende Nachteil einer großen Nachlaufänderung vermieden, der bei bekannten Doppelquerlenkerachsen mit zwei Einzellenkern unten und einem Dreieckslenker oben auftritt. Während sich beim Lenkvorgang bei den bekannten Doppelquerlenkerachsen der Schnittpunkt der beiden unteren Lenkerachsen verschiebt und der obere radseitige Lenkerpunkt stehenbleibt, bewegt der untere Lenker 26 das Dämpferrohr 11 beim Lenken mit, wodurch der obere Lenker 18 über den Arm 17 mitgenommen wird. Auf diese Weise wird die Lenkachse 33 in etwa parallel verschoben, so daß der Nachlauf im wesentlichen erhalten bleibt. Dieser Bewegungsablauf ist in der Figur 4 dargestellt, wobei die dicker ausgezogenen Linien die ursprüngliche Lage und die dünner ausgezogenen Linien die neue Lage darstellen. Ferner sind die entsprechenden Bezugszeichen der in die neue Lage verschobenen Teile mit einem Apostroph versehen.

Eine Optimierung der Lenkgeometrie und der Radführungskinematik wird durch eine Trennung der Radführungskinematik von der Lenkgeometrie ermöglicht. Dies wird dadurch erreicht, daß die Lenkbewegung der Ausführungsform der Figuren 1, 2 und 3 um eine Lenkachse 32 erfolgt, die aus den oberen und unteren Anlenkpunkten der Querlenker gebildet wird, während die Lenkbewegung der Ausführungsform der Figur 4 um die ideelle Lenkachse 33 verläuft. Das Federbein selbst hat keine Lenkfunktion und kann dementsprechend nach innen verlegt werden, um eine niedrige Haubenlinie zu verwirklichen. Die Radaufhängung ist ferner allradgeeignet, da der Störkrafthebelarm, das heißt der waagrechte Abstand zwischen der Radmitte und der Lenkachse, klein gehalten werden kann. Durch die Trennung der Radführung von der Lenkung ergeben sich große Abstimmöglichkeiten.

Neben den in den Figuren gezeigten Ausführungsformen der kombinierten Anordnung des Dämpferrohres mit einer Feder, ist auch eine getrennte Anordnung möglich.

## Patentansprüche

1. Radaufhängung für Fahrzeuge, mit einem ein Rad (2) lagernden Radträger (3), mit daran angelenktem oberen (18) und unteren (6; 23, 26) Querlenker, die jeweils mit ihrem dazu gegenüberliegenden Ende mit einem Fahrzeugaufbau (5) oder dergleichen gelenkig verbunden sind, wobei ein Dämpferrohr (11) mit seinem unteren Ende über ein Gelenk (9) an einem unteren Querlenker (6; 23, 26) angeordnet ist, und wobei sich das obere Ende des Dämpferrohres (11) am Fahrzeugaufbau (5) oder dergleichen abstützt,
dadurch gekennzeichnet, daß der obere Querlenker (18) über einen Arm (17) mit dem Dämpferrohr (11) verbunden ist, wobei der Arm (17) zum einen fest mit dem Dämpferrohr (11) und zum anderen über ein Gelenk (21) mit dem oberen Querlenker (18) verbunden ist.

2. Radaufhängung nach Anspruch 1, dadurch gekennzeichnet, daß der Arm (17) ungefähr parallel zur Fahrzeuglängsrichtung (30) ausgerichtet ist.

3. Radaufhängung nach den Ansprüchen 1 oder 2, dadurch gekennzeichnet, daß eine durch die Gelenke (19, 20) des oberen Querlenkers (18) gehende Verbindungslinie (22) möglichst nahe zur Dämpferrohrachse (31) verläuft bzw. diese schneidet.

4. Radaufhängung nach einem oder mehreren der vorhergehenden Ansprüche, gekennzeichnet, daß der obere Querlenker (18) bei vertikalen Relativbewegungen zwischen dem Querlenker (18) und dem Dämpferrohr (11) um die Verbindungslinie (22) schwenkbar ist.

5. Radaufhängung nach einem oder mehreren der vorhergehenden Ansprüche, dadurch gekennzeichnet, daß der obere Querlenker (18) bogenförmig um das Dämpferrohr (11) herum gekrümmt ist.

6. Radaufhängung nach einem oder mehreren der vorhergehenden Ansprüche, dadurch gekennzeichnet, daß das Dämpferrohr (11) so gelagert ist, daß es sich bei horizontalen Relativbewegungen zwischen dem oberen Querlenker (18) und dem Dämpferrohr (11) um die Dämpferrohrachse (31) dreht.

7. Radaufhängung nach einem oder mehreren der vorhergehenden Ansprüche, dadurch gekennzeichnet, daß der untere Querlenker aus zwei voneinander beabstandeten Einzellenkern (23, 26) besteht, die über jeweils ein Gelenk (24, 27) mit dem Radträger (3) verbunden sind.

## Claims

1. A wheel suspension for vehicles, comprising a wheel support (3) bearing a wheel (2) and pivoted to a top transverse link (18) and bottom transverse links (6; 23, 26), the opposite end of each link being pivotably connected to a vehicle body (5) or the like, the bottom end of a shock-absorbing tube (11) being connected by a joint (9) to a bottom transverse link (6; 23, 26) and the top end of the shock-absorbing tube (11) being braced against the vehicle body (5) or the like, characterised in that the top transverse link (18) is connected by an arm (17) to the shock-absorbing tube (11), the arm (17) being permanently connected to the shock-absorbing tube (11) at one end and to the top transverse link (18), via a joint (21), at the other end.

2. A wheel suspension according to claim 1, characterised in that the arm (17) is aligned approximately parallel to the longitudinal direction (30) of the vehicle.

3. A wheel suspension according to claim 1 or 2, characterised in that a connecting line (22) through the joints (19, 20) of the top transverse link (18) extends very near or intersects the axis (31) of the shock-absorbing tube.

4. A wheel suspension according to one or more of the preceding claims, characterised in that the the top transverse link (18) is pivotable around the connecting line (22) when the transverse link (18) moves vertically relative to the shock-absorbing tube (11).

5. A wheel suspension according to one or more of the preceding claims, characterised in that the top transverse link (18) is bent in an arc around the shock-absorbing tube (11).

6. A wheel suspension according to one or more of the preceding claims, characterised in that the shock-absorbing tube (11) is mounted so that it rotates around the shock-absorbing tube axis (31) and the top transverse link (18) moves horizontally relative to the shock-absorbing tube (11).

7. A wheel suspension according to one or more of the preceding claims, characterised in that the bottom transverse link is made up of two separate individual guide rods (23, 26) connected by respective joints (24, 27) to the wheel support (3).

## Revendications

1. Suspension de roue pour véhicules, avec un support de roue (3) portant une roue (2), avec un bras de suspension supérieur (18) et un bras inférieur (6 ; 23, 26) articulés sur le support, bras qui sont reliés par articulation respectivement à leurs extrémités opposées à une carrosserie de véhicule (5) ou équivalent, suspension dans laquelle un tube d'amortisseur (11) est fixé par son extrémité inférieure au moyen d'une articulation (9) à un bras de suspension inférieur (6 ; 23, 26) et dans laquelle l'extrémité supérieure du tube d'amortisseur (11) est montée sur la carrosserie (5) du véhicule ou équivalent, suspension de roue caractérisée en ce que le bras de suspension supérieur (18) est relié par un bras (17) au tube d'amortisseur (11), le bras (17) étant relié d'une part solidairement au tube d'amortisseur (11) et d'autre part au bras de suspension supérieur (18) par l'intermédiaire d'une articulation (21).

2. Suspension de roue selon la revendication 1, caractérisée en ce que le bras (17) est orienté à peu près parallèlement au sens longitudinal du véhicule (30).

3. Suspension de roue selon les revendications 1 ou 2, caractérisée en ce qu'une ligne de jonction (22) passant par les articulations (19, 20) du bras de suspension supérieur (18) se développe le plus près possible de l'axe (31) du tube d'amortisseur ou bien le coupe.

4. Suspension de roue selon une ou plusieurs des revendications précédentes, caractérisée en ce que le bras de suspension supérieur (18) peut pivoter lors de mouvements relatifs verticaux entre le bras (18) et le tube d'amortisseur (11) autour de la ligne de jonction (22).

5. Suspension de roue selon une ou plusieurs des revendications précédentes, caractérisée en ce que le bras de suspension supérieur (18) est courbé en forme d'arc autour du tube d'amortisseur (11).

6. Suspension de roue selon une ou plusieurs des revendications précédentes, caractérisée en ce que le tube d'amortisseur (11) est monté de façon à ce qu'il tourne lors de mouvements relatifs horizontaux entre le bras supérieur (18) et le tube amortisseur (11), autour de l'axe (31) du tube d'amortisseur.

7. Suspension de roue selon une ou plusieurs des revendications précédentes, caractérisée en ce que le bras de suspension inférieur se compose de deux bras séparés (23, 26) écartés l'un de l'autre, qui sont reliés au support de roue (3) respectivement par une articulation (24, 27).
